# EUROPEAN PATENT SPECIFICATION

(11) **EP 3 309 135 B1**
(45) Date of publication and mention of the grant of the patent: **14.08.2024**
(21) Application number: 15895072.5
(22) Date of filing: 26.06.2015
(51) Int. Cl.: C04B 38/02, C03B 19/08

(54) **METHOD FOR PRODUCING LARGE-SIZED FOAMED GLASS-CERAMIC BLOCKS**
VERFAHREN ZUR HERSTELLUNG VON GROSSEN GESCHÄUMTEN GLASKERAMIKBLÖCKEN
PROCÉDÉ DE FABRICATION DE BLOCS EN MOUSSE DE VITROCÉRAMIQUE DE GRANDES DIMENSIONS

(30) Priority: 10.06.2015 RU 2015116118
(43) Date of publication of application: 18.04.2018
(73) Proprietor: Cerapen Ltd., Moscow 121205 (RU)
(72) Inventor: CHEREPANOV, Andrej Borisovich, Moscow 125362 (RU); DOLMANOV, Igor' Nikolaevich, Moscow 125252 (RU); CHEREPANOV, Boris Stepanovich, Moscow 129272 (RU)
(74) Representative: Chimini, Francesco
(86) International application number: PCT/RU2015/000399
(87) International publication number: WO 2016/200286

(56) References cited:
- EA-B1- 007 884
- EA-B1- 017 891
- RU-C1- 2 451 000
- RU-C1- 2 540 741
- SU-A1- 936 953
- US-A- 5 788 608

## Description

### FIELD OF INVENTION

This invention relates to the field of production of porous silicate foamed materials, namely, foamed glass-ceramic blocks that may be used in building, radio engineering, metallurgy, shipbuilding, chemical, medical industries and agriculture.

### PRIOR ART

From the point of view of state of the art, a method for the production of foamed ceramic blocks is known to exist which is disclosed in SU 1715777 A1, published on 29.02.1992. The known method includes batch preparation incl. adding of 0.1 to 1.5 weight percents of silicon carbide (over 100%), semidry pressing to obtain a tile-shaped blank, tile drying, firing and foaming. Foaming of tiles results in a continuous bar which is then cut into blocks to be fed to the annealing furnace.

This method has some disadvantages which prevent from the production of high-quality products:
- stacking of pressed tiles to increase height of foamed bar leads to formation of large cavities in a foamed block;
- formation of a continuous foamed bar from staked tiles leads to loss of its linear motion along the furnace channel;
- pressing of large-size, 5 to 7 mm thick tiles was impossible due to low capacity of hydraulic presses;
- furnaces used for heat treatment of blanks with conveyors consisting of metal rollers with max. operating temperature 1050°C considerably narrowed a selection of masses for foaming.

The closest analogue of the claimed invention is a method for the production of glass-ceramic foamed materials disclosed in RU 2451000 C1, published on 20.05.2012. The method disclosed in the closest analogue includes preparation of a batch slip incl. adding of silicon carbide to the batch, batch dehydration incl. subsequent blank forming, blank drying, rapid firing, blank sintering to form a single bar, bar heating until foaming process is completed, subsequent cooling of single foamed bar, separation of bar into blocks of specified size and firing of blocks. At that, the quantity of silicon carbide or product treatment waste containing at least 25% of SiC added to the batch is 0.1 to 5.0%. Blanks are pressed to a thickness 10-60 mm, lower and side surfaces of dried blanks are coated with fire-resistant engobe prior to firing and foamed bar is separated into blocks by breaking along the blank coating surfaces.

Disadvantages of the closest analogue are as follows:
- higher product value due to significant energy consumption at the stage of slip mass drying;
- unhomogeneous formation of pores during foaming and significant dimensional variation due to substantial difference (300 to 500°C) between melting points of low-melt additive and binding component;
- decrease in kiln capacity caused by holding time during sintering and foaming processes;
- decoration method for foamed ceramic blocks by covering foamed bars with glaze granules containing pigments after foaming is difficult from the viewpoint of technology and ineffective;
- breaking of bars along the blank engobe coating surfaces does not always ensures a straight breaking line which results in higher amount of waste during mechanical treatment of cooled blocks;
- the method for the production of blocks with different density values by covering foamed bar surface with granules having different density turned out to be ineffective as some technological difficulties occurred during its application;
- the method did not provide a way to obtain foamed materials with crystallized structure having open porosity that significantly improves sound-proofing properties of the foamed material and allows its impregnation to obtain foamed materials with fundamentally new physical and technical properties.

### Disclosure of invention

The claimed invention is based on a task to make production of promising heat-insulating and structural glass-ceramic foamed construction materials more efficient, improve their quality and add new consumer properties to foamed blocks.

Technical result is manufacturing of foamed ceramic materials with thickness up to 200 mm with uniformly closed finely porous structure across the entire material volume and high physical and chemical properties.

The invention is defined in the claims.

The method for production of large-size glass-ceramic foamed blocks includes preparation of finely ground glass-ceramic phase with particle size 1-50 µm containing production waste with silicon carbide content at least 10 weight % incl. subsequent preparation of finely ground batch to produce foamed blocks with particle size 1-50 µm containing finely ground glass-ceramic phase in the amount of 5-95 weight % and binding component as a remainder, subsequent drying and pressing to obtain 15 to 60 mm thick blanks in the form of large-size tiles, and drying of large-size tiles to residual moisture content of 0.5 %. After drying large-size tiles are transferred to the kiln along the roller conveyor without moulds and trays, whereas roller conveyor speed at the end of sintering area for large-scale tiles inside the kiln is 5 to 25% less than before this area which ensures formation of a single sintered bar that is afterwards subject to foaming. Before dried large-size tiles are added to the kiln, their lower and two side surfaces parallel to roller conveyor motion are covered with double-layered engobe, and foaming at the end of kiln is then followed by rapid cooling of the bar down to the temperature providing stability of its shape, then a notch is applied on its surface perpendicularly to bar motion. Once the bar leaves the kiln, it is separated into blocks along notched lines, afterwards the blocks are fed to annealing furnace and then to mechanical treatment.

Preparation of finely ground glass-ceramic phase includes grinding of the mixture containing following components (in weight %): binding component - 5 to 95; flux - 5 to 95; production waste containing at least 10 weight % of silicon carbide - 0.5 to 10 (over 100%) incl. subsequent forming, drying and sintering of granules and subsequent foaming of granules, shock cooling and wet grinding of foamed granules to particle size 1-50 µm.

When preparing finely ground glass-ceramic phase, slip or dry process is used for grinding.

Granules are sintered and foamed at the temperatures 850-1050°C and held at foaming temperatures within 5-7 minutes.

Grinding of batch components is made using slip or dry process.

Large-size tiles are obtained by semidry or plastic pressing.

Over 100% of silicon carbide with grain size 5-40 µm in the amount of 0.05-1 weight % is added to the batch used for the production of foamed blocks 1.5 to 3 hours before completion of batch component grinding process.

During plastic pressing a comb-shaped developed surface with pyramidal teeth height up to 50 mm is created on a front surface of large-size tiles.

Prior to shock cooling of foamed bar obtained by batch plastic pressing, its front surface is rolled with cooled metal rollers with diameter 80-100 mm at the temperature 50 to 70°C less than its foaming temperature.

Vibrating metal guides or rotating vertical rollers are installed at the end of large-scale tile sintering zone inside the kiln.

Sintering in the kiln is performed at the temperatures 850-1050°C with holding during 20 to 30 minutes, and foaming is carried out at temperatures 20 to 150°C higher than sintering temperature incl. holding within 30-45 minutes.

Bar is cooled rapidly to the temperature 600-900°C.

Roller conveyor speed in the kiln is 1.1 to 1.25 m/min before the end of sintering zone and 1.0 m/min after the end of baking zone.

At least one component from the following group is used as binding component: tripoli, local fusible and high-melting clays, bentonites, liquid glass, soluble phosphates, orthophosphoric acid or different mixtures thereof, and at least one component from the following group is used as a flux: cullet, stone screening dust, fieldspar, pearlite, calcium borate, datolite concentrate, nepheline-syenite, spodumene, apatite tailing, liquid glass or different mixtures thereof.

Part of clay is replaced by 0.5 to 5 weight % of liquid glass, soluble phosphates or concentrated orthophosphoric acid.

The top surface of dried large-size tiles receives coating made of glaze or high-temperature colouring agent applied by pulverization.

First engobe layer contains a mass obtained from a batch to produce large-size tiles free of gasifiers and second layer consists of kaolin and alumina mixture.

Melting temperature of glass-ceramic phase is by 20 to 150°C less than bar foaming temperature.

Batch for blank production contains over 100% of oxidizers in the amount of 3-5 weight %.

Sodium sulphate, ferric oxide, chromium trioxide and molybdenum oxide are used as oxidizing agents.

Batch for blank production contains over 100% of glass phase crystallizers in the amount of 3 weight %.

TiO₂, Cr₂O₃, B₂O₃ are used as glass phase crystallizers.

Foaming temperature is checked and controlled in the foaming zone inside the kiln depending on bar foaming height.

The foamed bar is notched using corundum disc, gas-plasma burner or laser emission at temperatures from 600 to 900°C.

Abrasive production waste, waste of worn-out silicon-carbide floatstone, used silit bars are used as production waste with silicon carbide content of at least 10 weight %.

### Embodiment

Method for the production of large-size glass-ceramic foamed blocks includes following stages:
- preparation of finely ground glass-ceramic phase with particle size 1-50 µm containing production waste with silicon carbide content of at least 10 weight %.
- forming, drying, foaming of granules followed by rapid cooling of granules and wet grinding of foamed granules up to 1-50 µm particles.
- preparation of finely ground batch for the production of foamed blocks with particle size 1-50 µm containing finely ground glass-ceramic phase in the amount of 5-95 weight % and binding component as a remainder.
- drying and pressing of the batch to produce 15-60 mm thick foamed blocks in the form of large-size tiles;
- drying of large-size tiles to residual moisture content 0.5 %;
- covering of lower surfaces and two side surfaces of dried large-size tiles parallel to roller conveyor motion with double-layered engobe;
- transfer of large-size tiles to the kiln along the roller conveyor without moulds and trays application. It should be emphasized that roller conveyor speed at the end of large-scale tiles sintering zone inside the kiln is by 10-25% less than before this zone, which ensures formation of a single sintered bar followed by its foaming.
- at the end of kiln the bar is cooled rapidly down to the temperature providing stability of bar shape, and a notch is applied on its surface perpendicularly to roller conveyor motion;
- separation of bar into blocks along notched lines;
- transfer of blocks to annealing furnace;
- blocks' annealing;
- blocks' mechanical treatment
- sticking blocks together to make products convenient for construction of building envelopes and use for other purposes;

Preparation of finely ground glass-ceramic phase includes grinding of the batch containing following components (in weight %): binding component - 5 to 95; flux - 5 to 95; production waste containing at least 10 weight % of silicon carbide - 0.5-10 % (over 100 %).

Addition of prepared glass-ceramic phase to the batch to produce blanks in form of 15-60 mm thick large-size tiles ensures decrease in temperature and holding time during firing and foaming and allows to obtain foamed ceramic materials with thickness up to 200 mm with a uniformly closed finely porous structure across the entire material volume and high physical and technical properties.

Reduced speed of roller conveyor at the end of large-size tile sintering zone inside the kiln contributes to formation of a single sintered bar made of large-size tiles with subsequent foaming thereof, having a uniformly closed finely porous structure across the entire material volume and high physical and technical properties after foaming.

Application of double-layered engobe increases adhesion to foamed blank surface and prevents from adhesion of mass to roller conveyor and furnace side walls at high temperatures, which allows to obtain foamed ceramic materials with a uniformly closed finely porous structure across the entire material volume and high physical and technical properties after foaming at firing and foaming stages.

When preparing a finely ground glass-ceramic phase, slip or dry process is used for grinding of granules.

Granules are sintered and foamed at the temperature of 850 to 1050°C, with holding at foaming temperatures within 5-7 minutes.

Grinding of batch components for the production of foamed blocks is made using slip or dry process.

Large-size tiles are obtained by semidry or plastic pressing of the batch.

Over 100% of silicon carbide with grain size 5-40 µm in the amount of 0.05-1 weight % is added to the batch used for the production of foamed blocks 1.5 to 3 hours before completion of batch component grinding process. This ensures bar foaming and, therefore, results in production of foamed ceramic materials with a uniformly closed finely porous structure across the entire material volume and high physical and technical properties.

During plastic pressing a comb-shaped developed surface with pyramidal teeth height up to 50 mm is created on a front surface of large-size tiles which improves firing and foaming processes due to more rapid material heating and reaching of necessary foaming parameters to produce foamed ceramic materials with a uniformly closed finely porous structure across the entire material volume and high physical and technical properties.

Prior to rapid cooling of foamed bar, its front face is rolled with 080-100 mm cooled metal rollers at the temperature 50 to 70°C less than its foaming temperature in order to smooth the surface and reduce waste during mechanical treatment.

Vibrating metal guides or rotating vertical rollers are installed at the end of large-scale tile sintering zone inside the kiln providing straight-line motion of the bar in the furnace and excluding sticking of bar to furnace walls.

Sintering in kiln is performed at the temperature of 850 to 1050°C with holding during 20 to 30 minutes, and foaming is performed at the temperature 20 to 150°C higher than sintering temperature with holding within 30-45 minutes.

Bar is cooled rapidly down to the temperature 600-900°C.

Roller conveyor speed in kiln is 1.1 to 1.25 m/min before the end of baking zone and 1.0 m/min after the end of baking zone.

At least one component from the following group is used as binding component: tripoli, local fusible and high-melting clays, bentonites, liquid glass, soluble phosphates, concentrated orthophosphoric acid or different mixtures thereof, and at least one component from the following group is used as a flux: cullet, stone screening dust, fieldspar, pearlite, calcium borate, datolite concentrate, nepheline-syenite, spodumene, apatite tailing, liquid glass or different mixtures thereof.

Some clay is replaced by 0.5 to 5 weight % of liquid glass, soluble phosphates or concentrated orthophosphoric acid.

Glaze or high-temperature pigment is applied on the top surface of dried large-size tiles by pulverization.

First engobe layer contains a mass obtained from a batch for foamed blocks fabrication which does not contain gasifiers and second layer consists of kaolin and alumina mixture.

Melting temperature of glass-ceramic phase is lower than bar foaming temperature by 20 to 150°C.

Batch for blanks fabrication may additionally contain oxidizers, over 100%, in quantity of 3 to 5 weight %.

Sodium sulphate, ferric oxide, chromium trioxide and molybdenum oxide are used as pigments.

Batch for blanks fabrication contains glass phase crystallizers, over 100%, in quantity of 3 weight %.

TiO₂, Cr₂O₃, B ₂O₃ are used as glass phase crystallizers.

Foaming temperature is checked and controlled in foaming zone of kiln depending on bar foaming height using a laser level in bar foaming zone linked with burners operation and foaming temperature in kiln.

Notch on the foamed bar is made with corundum disc, gas-plasma burner or laser emission.

Abrasive production waste, waste of worn-out silicon-carbide floatstone, used silit bars are used as production waste with silicon carbide content of at least 10 weight %.

Pilot implementation of the "Method of large-size glass-ceramic foamed blocks fabrication" was performed at Volgograd ceramic factory, "Sokol" ceramic factory and technical glass research institute. Research and development work was performed earlier in "Stroimashkeramika" institute. Chemical composition of raw materials used is given in table 1.

### Example 1

Composition of the batch for glass-ceramic phase fabrication in weight %:
Clay from Navolokskoye deposit - 30;
Stone screening dust - 50;
Cullet - 20;
Production waste containing 50 weight % of SiC - 1 (over 100%).

Batch for the preparation of glass-ceramic phase was crushed in ball mills at humidity of 40 % within 24 hours until residue content on a sieve with 10000 holes per cm² is not more than 0,3 %, and production waste crushed in a ball mill and containing 50 weight % of silicon carbide was also included in the batch. Then the batch in the form of slip was dried in spraying dryer equipped with additional device for enlargement of granules with moisture content of 6 to 7 % in boiling layer to the diameter of about 800 µm. In order to avoid adhesion during drying and sintering they were dusted with finely ground kaolin and then placed into rotating drum where they were subject to drying to residual moisture content of 0.5 % and subsequent sintering and foaming at the temperature of 1010 to 1030°C with holding at foaming temperature during 5 to 7 minutes. Granules were cooled with cold water after hot baking to facilitate subsequent grinding thereof. Grinding of granules consisting of glass-ceramic phase was performed in ball mills during 15 hours, then a clay from Navolokskoye deposit with moisture content of 18 % and silicon carbide in quantity of 0.4 weight % (over 100 %) ground in vibration grinding mill to particle size less than 50 µm were added to granules. The whole slip mass with moisture content of 38 to 40 % was ground additionally during 3 hours and then it was fed to spraying dryer where it was dried to moisture content of 6 to 7%.

Composition of the batch for the production of foamed blocks in weight %:
Clay from Navolokskoye deposit - 40;
Glass-ceramic phase - 60;
Silicon carbide - 0.3 (over 100 %).

Moulding powder was aged in collecting bin for about a day and fed to dry pressing in hydraulic press at specific pressure of 170 to 200 kg/cm² with obtaining of blanks in the form of large-size tiles with dimensions of 505x505x15 mm or 1010x1010x15 mm (depending of press power), which were fed to vertical dryer where they were dried to residual moisture content of at most 0.5 %. Then the lower and two side surfaces of large-size tiles parallel to roller conveyor movement were covered with double-layered engobe and after that they were fed for drying to obtain moisture content not exceeding 0.5 % prior to entry to roller kiln. Glaze or high-temperature ceramic pigment layer was applied on a front face of large-size tiles using a pulverizer if necessary. Then large-size tiles without moulds and trays were placed on roller conveyor and 1 or 2 meter wide flow of large-size tiles was formed and fed to kiln. Roller conveyor speed in kiln was equal to 1.1 to 2.5 m/min before the end of baking zone and slowed down to 1.0 m/min after the flow. Vibrating metal guides made of high-temperature steel are installed in large-size tiles sintering zone of kiln which guides provide straight-line motion of uniform sintered bar formed from the flow of large-size tiles due to roller conveyor speed decrease at sintering temperature of 1010-1030°C with holding during 30 minutes. Then temperature grown rapidly up to 1160°C, at which temperature foaming of uniform bar with thickness up to 150 mm was performed during 45 minutes.

Bar was rolled between two cooled metal rollers with diameter of 100 mm at the temperature 50 to 60°C lower than foaming temperature and then cooled down rapidly to 800°C. At this temperature the bar was cut with gas-plasma burner or mechanically, with corundum disc. Cutting devices' moving speed was synchronized with foamed bar moving speed which allowed to obtain large-size foamed blocks with dimensions of 1x1 m or 2x1 m.

Separated blocks were transferred with increased speed of up to 5 m/min to collector and then to 6-tier trolley which was transferred to annealing furnace at temperatures of 600 to 700°C for slow cooling down of blocks during 22 to 24 hours. When blocks temperature reached at most 60°C they were forwarded to mechanical treatment and pasting together to obtain products necessary for building and construction work.

### Example 2

Composition of the batch for the production of glass-ceramic phase in weight %:
Clay from Volgogradskoye deposit - 30;
Stone screening dust - 70;
Production waste containing 10 weight % of SiC - 4 (over 100 %).

Above mentioned batch used to obtain glass-ceramic phase in the form of foamed granules was prepared using a technology described in example 1. Granules were sintered and foamed at the temperature of 1020 to 1040°C, with holding at foaming temperature within 5 to 7 minutes.

Composition of the batch for the production of foamed blocks in weight %:
Clay from Volgogradskoye deposit - 35;
Glass-ceramic phase - 65;
Silicon carbide - 0.4 (over 100).

Large-size foamed 120 mm thick blocks were made of the above mentioned batch using a technology described in example 1. Sintering was performed at 1030°C with holding during 30 minutes, and foaming was performed at 1150°C within 45 minutes.

### Example 3

Composition of the batch for the production of glass-ceramic phase in weight %:
Clay from Pulkovskoye deposit - 20;
Apatite tailing - 80%
Production waste containing 20 weight % of SiC - 2 (over 100 %).

Above mentioned batch used for the production of glass-ceramic phase was prepared using a technology described in example 1. Granules were sintered and foamed at the temperature of 860°C, with holding at foaming temperature within 5-7 minutes.

Composition of the batch for the production of foamed blocks in weight %: %:
Clay from Pulkovskoye deposit - 40;
Glass-ceramic phase - 60;
Silicon carbide - 0.5 (over 100 %).

Glass-ceramic phase was mixed with crushed clay and silicon carbide on chasers and in roller mixers with addition of water to obtain moisture content of 17%. Thoroughly mixed mass including all components was fed to vacuum press where blanks were fabricated by plastic pressing in the form of large-size tiles with dimensions of 0.5x2x0.05 m with developed front surface (with pyramidal teeth height of 40 mm) speeding up drying and baking surfaces. Large-size tiles were cured slightly during 24 hours and then dried in vertical dryer to obtain moisture content of 0.5 %. Further manufacturing methods were similar to those described in example 1.

Sintering was performed at 870°C with holding during 30 minutes, and foaming was performed at 1000°C during 40 minutes to obtain a 170 mm thick foamed bar. Foamed bar was rolled between metal rollers at 950°C and cooled down rapidly to 600°C.

### Example 4

Example 4 is similar to example 3 except following differences:
Composition of the batch for glass-ceramic phase fabrication in weight %:
Clay from Pulkovskoye deposit - 30;
Nepheline-syenite - 40;
Tripoli - 30;
Production waste containing 10 weight % of SiC - 5 (over 100%).

Granules were sintered and foamed at the temperature of 960 to 980°C, with holding at foaming temperature during 5 to 7 minutes.

Composition of the batch for foamed blocks fabrication in weight %:
Clay from Pulkovskoye deposit - 40;
Glass-ceramic phase - 60;
Silicon carbide - 0.45 (over 100 %).

Sintering was performed in kiln at 950°C with holding during 30 minutes, and foaming was performed at 1100°C during 45 minutes.

### Example 5.

Example 5 is similar to example 3 except following differences:
Composition of the batch for glass-ceramic phase fabrication in weight %:
Clay from Volgogradskoye deposit - 30;
Stone screening dust - 70;
Production waste containing 60 weight % of SiC - 0.8 (over 100 %).

Granules were sintered and foamed at the temperature of 1020 to 1040°C, with holding at foaming temperature during 5 to 7 minutes.

Composition of the batch for foamed blocks fabrication in weight %:
Clay from Volgogradskoye deposit - 40;
Glass-ceramic phase - 60;
Silicon carbide - 0.5 (over 100 %).

Sintering was performed in kiln at 1020°C with holding during 30 minutes, and foaming was performed at 1130°C during 45 minutes.

### Example 6

Example 6 shows insufficient mass foaming in case of lack of oxygen. Example 6 is similar to example 3 except following differences:

Composition of the batch for glass-ceramic phase fabrication in weight %:
Clay from Lukoshkinskoye deposit - 30;
Cullet - 70;
Production waste containing 30 mass. of SiC - 1 (over 100%).

Granules were sintered and foamed at the temperature of 1020 to 1040°C, with holding at foaming temperature during 5 to 7 minutes.

Composition of the batch for foamed blocks fabrication in weight %:
Clay from Lukoshkinskoye deposit - 40;
Glass-ceramic phase - 60;
Silicon carbide - 0.5 (over 100 %)

Large-size blanks were sintered at 1020-1040°C with holding during 30 minutes and foamed at 1150°C with holding during 45 minutes.

### Example 7

Example 7 is similar to example 6 except following differences:

Composition of the batch for glass-ceramic phase fabrication in weight %:
Clay from Lukoshkinskoye deposit - 30;
Cullet - 70;
Production waste containing 30 weight % of SiC - 1 (over 100%).

Granules were sintered and foamed at the temperature of 1020 to 1040°C, with holding at foaming temperature during 5 to 7 minutes.

Composition of the batch for foamed blocks fabrication in weight %: %:
Clay from Lukoshkinskoye deposit - 57.1;
Glass-ceramic phase - 38.1 %
Iron minium (FesO₄) - 4.8;
Silicon carbide - 0.5 (over 100 %).

Sintering was performed in kiln at 1000°C with holding during 30 minutes, and foaming was performed at 1150°C during 45 minutes.

### Example 8

Example 8 is similar to example 3 except following differences:

Composition of the batch for glass-ceramic phase fabrication in weight %:
Clay from Rostovskoye deposit - 30;
Fieldspar from Vishnevogorskoye deposit - 70;
Production waste containing 15 mass. of SiC - 3 (over 100%).

Granules were sintered and foamed at the temperature of 1020 to 1040°C, with holding at foaming temperature during 5 to 7 minutes.

Composition of the batch for foamed blocks fabrication in weight %:
Glass-ceramic phase - 95;
Liquid glass - 5;
Silicon carbide - 0.45 (over 100 %).

Sintering was performed in kiln at 1030°C with holding during 30 minutes, and foaming was performed at 1150°C during 45 minutes.

### Example 9

Example 9 is similar to example 3 except following differences:

Composition of the batch for glass-ceramic phase fabrication in weight %:
Datolite concentrate - 70;
Milled kaolin - 30;
75 % orthophosphoric acid - 5;
Production waste containing 50 weight % of SiC - 1 (over 100).

Granules were sintered and foamed at the temperature of 970°C, with holding at foaming temperature during 5 to 7 minutes.

Composition of the batch for foamed blocks fabrication in weight %:
Glass-ceramic phase - 95;
Carboxymethylcellulose - 2;
75 % orthophosphoric acid - 3;
Silicon carbide - 0.5 (over 100 %).
Carboxymethylcellulose was added to strengthen blanks formed on hydraulic press at the pressure of 230 kg/cm².

Sintering was performed in kiln at 930°C with holding during 20 minutes, and foaming was performed at 980°C during 40 minutes.

Physical-mechanical properties of large-size glass-ceramic blocks fabricated using methods described in examples from 1 to 9 are given in table 2.

**Table 1**

| Raw material | Content in weight % % | | | | | | | | | | | | |
|---|---|---|---|---|---|---|---|---|---|---|---|---|---|
| | SiO₂ | AL₂O₃ | TiO 2 | Fe₂O₃ | CaO | MgO | K₂O | Na₂O | B₂O₃ | P₂O₅ | S O 3 | loss on ignition | total |
| Tripoli from Potani nskoye deposit | 76.16 | 7.52 | - | 4.10 | 1.05 | 0.75 | - | - | - | 1.23 | - | 7.50 | 98.30 |

| Clay raw materials | | | | | | | | | | | | | |
|---|---|---|---|---|---|---|---|---|---|---|---|---|---|
| Clay from Volgog radsko ye deposit | 52.80 | 19.51 | 1.1 6 | 8.47 | 2.50 | 4.80 | 3.05 | 1.22 | - | - | - | 6.12 | 99.63 |
| Clay from Kolchu ginsko ye deposit | 69.17 | 15.33 | 0.6 9 | 4.91 | 2.30 | 1.93 | 1.38 | 0.77 | - | - | - | 2.85 | 99.33 |
| Clay from Navolo kskoye deposit | 58.48 | 20.21 | 1.0 1 | 6.50 | 2.48 | 2.40 | 2.89 | 0.92 | - | - | - | 5.62 | 100.51 |
| Clay from Pulkov skoye deposit | 59.07 | 18.15 | 0.7 6 | 6.67 | 1.47 | 2.77 | 5.26 | 1.83 | - | - | - | 4.36 | 100.34 |
| Clay from Lukosh kinsko ye deposit | 69.90 | 17.35 | - | 3.26 | 0.34 | 0.42 | 1.52 | 0.30 | - | - | - | 6.21 | 99.30 |
| Clay from Serebr yakovs koye deposit | 65.10 | 19.72 | - | 3.50 | 0.70 | 0.60 | 2.00 | 0.70 | - | - | - | 7.40 | 99.72 |
| Clay from Rostov skoye deposit | 66.57 | 14.34 | 0.6 3 | 4.87 | 4.48 | 1.80 | 2.56 | 1.28 | - | - | - | 2.86 | 99.41 |
| Benton ite | 52.30 | 16.55 | 0.9 5 | 5.20 | 5.49 | 3.03 | 0.92 | 1.92 | - | 1.59 | 0. 0 9 | 12.04 | 100.08 |

| Flux | | | | | | | | | | | | | |
|---|---|---|---|---|---|---|---|---|---|---|---|---|---|
| Cullet | 71.00 | 2.90 | - | 0.15 | 7.15 | 4.65 | 0.80 | 13.8 0 | - | - | - | - | 100.45 |
| Stone screeni ng dust | 65.14 | 17.14 | - | 3.18 | 2.64 | 1.63 | 5.24 | 4.10 | - | - | - | 0.92 | 99.99 |
| Fieldsp ar from Vishne vogors koye deposit | 60.50 | 22.18 | 0.3 0 | 0.58 | 0.22 | - | 7.34 | 8.14 | - | - | - | 0.72 | 99.98 |
| Pearlit e from Aragat skoye deposit | 73.74 | 12.64 | - | 1.00 | 1.26 | - | 1.28 | 4.36 | - | - | 0. 3 4 | 4.84 | 99.46 |
| Calciu m borate | 0.4 | 0.04 | - | 0.05 | 37.4 0 | - | 0.10 | 0.10 | 44.3 0 | - | 0. 4 0 | 18.10 | 100.89 |
| Datolit e concen trate | 35.63 | - | - | 2.79 | 34.8 0 | - | - | - | 21.8 0 | - | 0. 3 0 | 5.63 | 100.95 |
| Nephel ine- syenite | 45.20 | 32.30 | - | 0.90 | 0.20 | - | 5.00 | 15.7 0 | - | - | - | 0.40 | 99.70 |
| Spodu mene | 64.50 | 27.40 | - | - | - | - | - | 8.10 | - | - | - | - | 100.00 |
| Apatite tailing | 42.00 | 16.00 | 3.5 0 | 7.90 | 7.00 | 2.45 | 6.50 | 9.55 | - | 0.65 | - | - | 95.55 |
| Liquid glass | 32.00 | 0.20 | - | 0.10 | 0.20 | - | - | 13.0 0 | - | - | 0. 1 5 | 54.50 | 100.15 |

**Table 2**

| | | | | | | | | | |
|---|---|---|---|---|---|---|---|---|---|
| Physical-mechanical properties | Example 1 | Example 2 | Example 3 | Example 4 | Example 5 | Example 6 | Example 7 | Example 8 | Example 9 |

| Glass-ceramic phase granules | | | | | | | | | |
|---|---|---|---|---|---|---|---|---|---|
| Diameter, mm | 4-10 | 3-8 | 4-6 | 2-6 | 2-5 | 2-5 | 2-5 | 3-8 | 4-8 |
| Bulk density, kg/m³ | 250 | 300 | 250 | 270 | 350 | 380 | 370 | 240 | 220 |

| Large-size glass-ceramic foamed blocks | | | | | | | | | |
|---|---|---|---|---|---|---|---|---|---|
| Average pores diameter, mm | 0.8 | 0.9 | 1.0 | 1 | 0.5 | 1.0 | 1.0 | 1.2 | 1.4 |
| Apparent density, kg/m³ | 356 | 380 | 253 | 251 | 510 | 390 | 244 | 257 | 160 |
| Compression strength, MPa | 5.6 | 6 | 3 | 3 | 10.7 | 6.7 | 2.8 | 3.2 | 1 |
| Bending strength, MPa | 3.1 | 3.3 | 2 | 2 | 5.4 | 3.5 | 1.9 | 2.1 | 0.9 |
| Thermal conductivity, W/m·K | 0.22 | 0.24 | 0.14 | 0.14 | 0.32 | 0.26 | 0.14 | 0.14 | 0.06 |
| Volumetric water absorption, % | 3.5 | 5 | 2.5 | 2.6 | 2.1 | 2.8 | 4 | 3.6 | 2.8 |

## Claims

1. A method for production of large-size glass-ceramic foamed blocks, comprising: preparation of finely ground glass-ceramic phase with particle size 1-50 µm wherein said preparation includes grinding of the batch containing following components in weight %: binding component - 5 to 95; flux - 5 to 95; production waste containing at least 10 mass % of silicon carbide - 0.5 to 10 over 100%; forming, drying and sintering of granules, subsequent foaming thereof, rapid cooling and wet grinding of the foamed granules to particle size of 1 to 50 µm; subsequently preparation of finely ground batch with particle size 1-50 µm to produce foamed blocks, wherein said preparation comprises grinding the components for foamed blocks fabrication using slip or dry process, said finely ground batch contains finely ground glass-ceramic phase in the amount of 5-95 weight %, binding component, wherein the binding component and the glass-ceramic phase add to 100%, and silicon carbide - in an amount of 0,05 to 1,0 weight % is calculated in addition to 100%, wherein silicon carbide is introduced to the batch used for foamed blocks production 1.5 to 3 hours before batch components grinding completion, while the grain size of silicon carbide is from 5 to 40 µm; wherein the method further comprises subsequently drying and pressing the finely ground batch to obtain 15-60 mm thick blanks in the form of large-size tiles, and drying of large-size tiles to residual moisture content of 0.5 %; afterwards large-size tiles are transferred to the kiln along a roller conveyor without moulds and trays, whereas the roller conveyor's speed at the end of large-scale tile sintering zone inside the kiln is 5 to 25% less than before this zone, which ensures formation of a single sintered bar that is then subject to foaming; before dried large-size tiles are added to the kiln, their lower and two side surfaces parallel to roller conveyor motion are covered with double-layered engobe, and foaming at the end of kiln the bar is then followed by rapid cooling down to the temperature providing stability of its shape, then a notch is applied on its surface perpendicularly to movement of the roller conveyor; once the bar leaves the kiln, it is separated into blocks along notched lines, afterwards the blocks are fed to annealing furnace and then to a mechanical treatment.

2. The method as per claim 1, **characterized by** the fact that when preparing finely ground glass-ceramic phase, granules are sintered and foamed at the temperature of 850 to 1050°C, with a holding at foaming temperatures for 5-7 minutes.

3. The method as per claim 1, **characterized by** the fact that silicon carbide is introduced to the batch used for foamed blocks production 1.5 to 3 hours before batch components grinding completion, while the grain size of silicon carbide is from 5 to 40 µm.

4. The method as per claim 1, **characterized by** the fact that prior to rapid cooling of the foamed bar obtained by batch plastic its front face is rolled with cooled metal rollers with diameter of 80 to 100 mm at temperature 50 to 70°C lower than its foaming temperature.

5. The method as per claim 1, **characterized by** the fact that vibrating metal guides or rotating vertical rollers are installed at the end of large-scale tiles sintering zone of the kiln.

6. The method as per claim 1, **characterized by** the fact that sintering in the kiln is performed at a temperature of 850 to 1050°C with a holding for 20-30 minutes, and foaming is performed at a temperature that is 20 to 150°C higher than the sintering temperature with a holding for 30-45 minutes.

7. The method as per claim 1, **characterized by** the fact that bar is cooled rapidly down to a temperature of 600 to 900°C.

8. The method as per claim 1, **characterized by** the fact that the roller conveyor's speed in the kiln is 1.1 to 1.25 m/min before the end of the sintering zone and 1.0 m/min after the end of the sintering zone.

9. The method as per claim 1, **characterized by** the fact that the melting temperature of the glass-ceramic phase is lower than the bar foaming temperature by 20 to 150°C.

10. The method as per claim 1, **characterized by** the fact that a glaze or a high-temperature pigment is applied on the top surface of the dried large-size tiles by pulverization.

11. The method as per claim 1, **characterized by** the fact that a batch for blanks fabrication contains oxidizers over 100 % in quantity of 3 to 5 weight %.

12. The method as per claim 1, **characterized by** the fact that the foaming temperature is checked and controlled in the foaming zone of the kiln depending on the bar foaming height.

## Patentansprüche

1. Verfahren zur Herstellung von großformatigen glaskeramischen geschäumten Blöcken, umfassend: Herstellung einer fein gemahlenen glaskeramischen Phase mit einer Teilchengröße von 1-50 µm, wobei die Herstellung das Mahlen der Charge umfasst, die die folgenden Komponenten in Gewichts-% enthält:
Bindemittelkomponente - 5 bis 95; Flussmittel - 5 bis 95; Produktionsabfälle, die mindestens 10 Massen-% Siliciumcarbid enthalten - 0,5 bis 10 über 100 %;
Formen, Trocknen und Sintern des Granulats, anschließendes Schäumen desselben, schnelles Abkühlen und Nassmahlen des geschäumten Granulats auf eine Teilchengröße von 1 bis 50 µm; anschließende Herstellung einer fein gemahlenen Charge mit einer Teilchengröße von 1-50 µm um geschäumte Blöcke herzustellen, wobei die Herstellung das Mahlen der Komponenten für die Herstellung von geschäumten Blöcken unter Verwendung eines Schlickers oder eines Trockenverfahrens umfasst, wobei die fein gemahlene Charge fein gemahlene glaskeramische Phase in einer Menge von 5-95 Gewichts-%, Bindemittelkomponente, wobei sich die Bindemittelkomponente und die glaskeramische Phase zu 100 % addieren, und Siliciumcarbid - in einer Menge von 0,05 bis 1,0 Gewichts-%, die zu 100 % hinzugerechnet wird, enthält, wobei Siliciumcarbid in die für die Herstellung von geschäumten Blöcken verwendete Charge 1,5 bis 3 Stunden vor dem Abschluss des Mahlens der Chargenkomponenten zugeführt wird, während die Korngröße des Siliciumcarbids 5 bis 40 µm beträgt; wobei das Verfahren ferner das anschließende Trocknen und Pressen der fein gemahlenen Charge, um 15-60 mm dicke Rohlinge in Form von großformatigen Fliesen zu erhalten, und das Trocknen der großformatigen Fliesen auf einen Restfeuchtigkeitsgehalt von 0,5 % umfasst; anschließend die großformatigen Fliesen auf einer Rollenbahn ohne Formen und Tabletts in den Ofen befördert werden, wobei die Geschwindigkeit der Rollenbahn am Ende der Sinterzone der großformatigen Fliesen im Ofen um 5 bis 25 % geringer ist als vor dieser Zone, was die Bildung eines einzigen gesinterten Stabes gewährleistet, der dann einem Schäumen unterzogen wird; bevor die getrockneten großformatigen Fliesen in den Ofen gegeben werden, ihre Unterseite und die beiden Seitenflächen parallel zur Bewegung der Rollenbahn mit einer doppellagigen Engobe bedeckt werden, und nach dem Schäumen am Ende des Ofens der Stab schnell auf die Temperatur abgekühlt wird, die seine Formstabilität gewährleistet, auf seiner Oberfläche dann senkrecht zur Bewegung der Rollenbahn eine Kerbe angebracht wird; sobald der Stab den Ofen verlässt, er entlang der gekerbten Linien in Blöcke getrennt wird, anschließend die Blöcke dem Glühofen zugeführt und dann einer mechanischen Behandlung unterzogen werden.

2. Verfahren nach Anspruch 1, **dadurch gekennzeichnet, dass** bei der Herstellung der fein gemahlenen glaskeramischen Phase das Granulat bei einer Temperatur von 850 bis 1050°C gesintert und geschäumt wird, wobei es 5-7 Minuten bei den Schäumungstemperaturen gehalten wird.

3. Verfahren nach Anspruch 1, **dadurch gekennzeichnet, dass** Siliciumcarbid 1,5 bis 3 Stunden vor dem Abschluss des Mahlens der Chargenkomponenten, in die für die Herstellung der geschäumten Blöcke verwendete Charge eingebracht wird, während die Korngröße des Siliciumcarbids 5 bis 40 µm beträgt.

4. Verfahren nach Anspruch 1, **dadurch gekennzeichnet, dass** vor der schnellen Abkühlung des geschäumten Stabes, der durch Chargenplastik erhalten wurde, seine Vorderseite mit gekühlten Metallwalzen mit einem Durchmesser von 80 bis 100 mm bei einer Temperatur, die 50 bis 70°C unter seiner Schäumungstemperatur liegt, gewalzt wird.

5. Verfahren nach Anspruch 1, **dadurch gekennzeichnet, dass** vibrierende Metallführungen oder rotierende vertikale Walzen am Ende der Sinterzone für großformatige Fliesen des Ofens installiert werden.

6. Verfahren nach Anspruch 1, **dadurch gekennzeichnet, dass** das Sintern im Ofen bei einer Temperatur von 850 bis 1050°C mit einer Haltezeit von 20-30 Minuten durchgeführt wird und das Schäumen bei einer Temperatur, die 20 bis 150°C höher als die Sintertemperatur ist, mit einer Haltezeit von 30-45 Minuten durchgeführt wird.

7. Verfahren nach Anspruch 1, **dadurch gekennzeichnet, dass** der Stab schnell auf eine Temperatur von 600 bis 900°C heruntergekühlt wird.

8. Verfahren nach Anspruch 1, **dadurch gekennzeichnet, dass** die Geschwindigkeit der Rollenbahn im Ofen 1,1 bis 1,25 m/min vor dem Ende der Sinterzone und 1,0 m/min nach dem Ende der Sinterzone beträgt.

9. Verfahren nach Anspruch 1, **dadurch gekennzeichnet, dass** die Schmelztemperatur der glaskeramischen Phase um 20 bis 150°C niedriger ist als die Stabschäumungstemperatur.

10. Verfahren nach Anspruch 1, **dadurch gekennzeichnet, dass** auf die Oberseite der getrockneten großformatigen Fliesen durch Pulverisierung eine Glasur oder ein Hochtemperaturpigment aufgebracht wird.

11. Verfahren nach Anspruch 1, **dadurch gekennzeichnet, dass** eine Charge zur Herstellung von Rohlingen Oxidationsmittel über 100 % in einer Menge von 3 bis 5 Gewichts-% enthält.

12. Verfahren nach Anspruch 1, **dadurch gekennzeichnet, dass** die Schäumungstemperatur in der Schäumungszone des Ofens in Abhängigkeit von der Schäumungshöhe des Stabes kontrolliert und geregelt wird.

## Revendications

1. Procédé de production de blocs expansés en vitrocéramique de grande taille comprenant : la préparation d'une phase vitrocéramique finement broyée ayant une taille de particule de 1 à 50 µm dans lequel ladite préparation comprend le broyage du lot contenant les composants suivants en % en poids : composant liant - 5 à 95 ; fondant - 5 à 95 ; déchets de production contenant au moins 10 % en masse de carbure de silicium - 0,5 à 10 par rapport à 100 % ; la mise en forme, le séchage et le frittage de granulés, puis l'expansion de ceux-ci, le refroidissement rapide et le broyage par voie humide des granulés expansés jusqu'à une taille de particule de 1 à 50 µm ; ensuite la préparation d'un lot finement broyé ayant une taille de particule de 1 à 50 µm pour produire des blocs expansés, dans lequel ladite préparation comprend le broyage des composants pour la fabrication de blocs expansés en utilisant un procédé par barbotine ou par voie sèche, ledit lot finement broyé contient une phase vitrocéramique finement broyée en une quantité de 5 à 95 % en poids, un composant liant, dans lequel le composant liant et la phase vitrocéramique totalisent 100 %, et du carbure de silicium - en une quantité de 0,05 à 1,0 % en poids calculée en plus de 100 %, dans lequel du carbure de silicium est introduit dans le lot utilisé pour la production de blocs expansés 1,5 à 3 heures avant la fin du broyage des composants du lot, tandis que la taille de grain du carbure de silicium est de 5 à 40 µm ; dans lequel le procédé comprenant en outre le séchage et le pressage ultérieurs du lot finement broyé pour obtenir des ébauches de 15 à 60 mm d'épaisseur sous forme de carreaux de grande taille, et le séchage des carreaux de grande taille jusqu'à une teneur en humidité résiduelle de 0,5 % ; ensuite les carreaux de grande taille sont transférés dans le four le long d'un transporteur à rouleaux sans moules ni plateaux, tandis que la vitesse du transporteur à rouleaux à la fin de la zone de frittage des carreaux de grande taille à l'intérieur du four est de 5 à 25 % inférieure à celle avant cette zone, ce qui garantit la formation d'une unique barre frittée qui est ensuite soumise à une expansion ; avant que les carreaux séchés de grande taille ne soient ajoutés au four, leur surface inférieure et leurs deux surfaces latérales parallèles au déplacement du transporteur à rouleaux sont recouvertes d'un engobe double couche, et l'expansion à la fin du four de la barre est ensuite suivie d'un refroidissement rapide jusqu'à la température fournissant la stabilité de sa forme, ensuite une entaille est appliquée sur sa surface perpendiculairement au déplacement du transporteur à rouleaux ; dès que la barre a quitté le four, elle est séparée en blocs le long de lignes entaillées, après quoi les blocs sont amenés dans un four de recuit et ensuite à un traitement mécanique.

2. Procédé selon la revendication 1, **caractérisé par le fait que** lors de la préparation de la phase vitrocéramique finement broyée, les granulés sont frittés et expansés à une température de 850 à 1 050 °C, avec maintien aux températures d'expansion pendant 5 à 7 minutes.

3. Procédé selon la revendication 1, **caractérisé par le fait que** du carbure de silicium est introduit dans le lot utilisé pour la production des blocs expansés 1,5 à 3 heures avant la fin du broyage des composants du lot, tandis que la taille de grain du carbure de silicium est de 5 à 40 µm.

4. Procédé selon la revendication 1, **caractérisé par le fait qu'**avant le refroidissement rapide de la barre expansée obtenue par plastique de lot, sa face avant est laminée avec des rouleaux métalliques refroidis d'un diamètre de 80 à 100 mm à une température inférieure de 50 à 70 °C à sa température d'expansion.

5. Procédé selon la revendication 1, **caractérisé par le fait que** des guides métalliques vibrants ou des rouleaux verticaux rotatifs sont installés à la fin de la zone de frittage des carreaux de grande taille du four.

6. Procédé selon la revendication 1, **caractérisé par le fait que** le frittage dans le four est effectué à une température de 850 à 1 050 °C avec un maintien pendant 20 à 30 minutes, et l'expansion est effectuée à une température qui est de 20 à 150 °C supérieure à la température de frittage avec un maintien pendant 30 à 45 minutes.

7. Procédé selon la revendication 1, **caractérisé par le fait que** la barre est refroidie rapidement jusqu'à une température de 600 à 900 °C.

8. Procédé selon la revendication 1, **caractérisé par le fait que** la vitesse du transporteur à rouleaux dans le four est de 1,1 à 1,25 m/min avant la fin de la zone de frittage et de 1,0 m/min après la fin de la zone de frittage.

9. Procédé selon la revendication 1, **caractérisé par le fait que** la température de fusion de la phase vitrocéramique est inférieure à la température d'expansion de la barre de 20 à 150 °C.

10. Procédé selon la revendication 1, **caractérisé par le fait qu'**un vernis ou qu'un pigment haute température est appliqué sur la surface supérieure des carreaux séchés de grande taille par pulvérisation.

11. Procédé selon la revendication 1, **caractérisé par le fait qu'**un lot de fabrication d'ébauches contient par rapport à 100 % des oxydants en une quantité de 3 à 5 % en poids.

12. Procédé selon la revendication 1, **caractérisé par le fait que** la température d'expansion est vérifiée et régulée dans la zone d'expansion du four en fonction de la hauteur d'expansion de la barre.
